# EUROPÄISCHE PATENTSCHRIFT

(11) **EP 1 746 307 B1**
(45) Veröffentlichungstag und Bekanntmachung des Hinweises auf die Patenterteilung: **12.09.2012**
(21) Anmeldenummer: 06012372.6
(22) Anmeldetag: 16.06.2006
(51) Int. Cl.: F16F 15/123, F16H 45/02

(54) **Torsionsschwingungsdämpfer**
Torsion vibration damper
Amortisseur de vibrations de torsion

(30) Priorität: 22.07.2005 DE 102005034338
(43) Veröffentlichungstag der Anmeldung: 24.01.2007
(73) Patentinhaber: ZF Friedrichshafen AG, 88046 Friedrichshafen (DE)
(72) Erfinder: Breier, Horst, 97456 Dittelbrunn (DE)

(56) Entgegenhaltungen:
- WO-A1-99/10664
- DE-A1- 4 431 640
- FR-A1- 2 492 024
- FR-A1- 2 757 586
- GB-A- 2 083 166

## Beschreibung

Die Erfindung betrifft einen Torsionsschwingungsdämpfer gemäß dem Oberbegriff des Anspruches 1.

Durch die WO 99/10664 A1, welche den nächst liegenden Stand der Technick bildet, ist ein Torsionsschwingungsdämpfer für eine Überbrückungskupplung einer hydrodynamischen Kopplungsanordnung mit einem antriebsseitigen Übertragungselement und einem relativ hierzu gegen die Wirkung von Energiespeichern um einen Relativdrehwinkel auslenkbaren abtriebsseitigen Übertragungselement bekannt. Das wenigstens eine Übertragungselement pro Relativauslenkrichtung verfügt über eine Mehrzahl von Ausnehmungen zur Aufnahme jeweils eines Energiespeichers, sowie über umfangsseitige Begrenzungen beidseits jeder Ausnehmung, wobei jede dieser umfangsseitigen Begrenzungen als Ansteuerelement für den zugeordneten Energiespeicher wirksam sein kann.

Ohne Relativdrehauslenkung der Übertragungselemente ist bei zumindest einem Teil der Ausnehmungen wenigstens jeweils eine umfangsseitige Begrenzung zur Bereitstellung eines Freiwinkels mit vorbestimmtem Drehwinkelabstand gegenüber der jeweils benachbarten Endwindung des zugeordneten Energiespeichers angeordnet, so dass erst bei Erreichen einer vorgegebenen Relativdrehauslenkweite in der jeweils gewählten Relativdrehauslenkrichtung der Übertragungselemente der vorbestimmte Drehwinkelabstand aufgebraucht ist, und die entsprechende umfangsseitige Begrenzung als Ansteuerelement auf die benachbarte Endwindung des zugeordneten Energiespeichers einwirkt. Dadurch gelangt bei zumindest einem Teil der Energiespeicher das jeweilige Ansteuerelement erst nach Passage eines vorbestimmten Freiwinkels in Umfangsrichtung mit einer zugeordneten Endwindung des entsprechenden Energiespeichers in Wirkverbindung. Sind gleichzeitig auch Ausnehmungen vorhanden, bei denen die jeweilige umfangsseitige Begrenzung bereits ohne Relativdrehauslenkung der Übertragungselemente unmittelbar an den jeweils zugeordneten Endwindungen der entsprechenden Energiespeicher zur Anlage kommen, entsteht eine mehrstufige Wirkung, indem bei Relativauslenkung der beiden Übertragungselemente zunächst diejenigen Energiespeicher wirksam sind, die mit ihren Endwindungen unmittelbar an den umfangsseitigen Begrenzungen in Anlage stehen, und anschließend erst bei noch weitergehender Relativauslenkung auch diejenigen Energiespeicher, deren umfangsseitige Endwindungen im unbelasteten Zustand noch über einen Freiwinkel zu den Endwindungen der entsprechenden Energiespeicher verfügt hatten.

Die umfangsseitigen Begrenzungen der Ausnehmungen des jeweiligen Übertragungselementes sind bei der WO 99/10664 A1 im Wesentlichen entlang der gleichen Verbindungslinie zu einer Drehachse auf dieselbe ausgerichtet wie die umfangsseitigen Begrenzungen der Ausnehmungen des jeweils anderen Übertragungselementes und auch die umfangsseitigen Endwindungen jedes Energiespeichers. Somit kommt auch bei fehlender Relativdrehauslenkung der Übertragungselemente die jeweilige umfangsseitige Endwindung jedes Energiespeichers stets vollflächig an der zugeordneten umfangsseitigen Begrenzung des entsprechenden Übertragungselementes in Anlage.

Nachteilig ist bei einem derartigen Torsionsschwingungsdämpfer, dass, sobald die umfangsseitige Begrenzung eines Übertragungselementes eine in Umfangsrichtung wirkende Kraft auf die zugeordnete umfangsseitige Endwindung ausübt, stets die volle Gegenwirkung des Energiespeichers überwunden werden muss. Dies macht sich durch Stufen in der jeweiligen Federkennlinie bemerkbar.

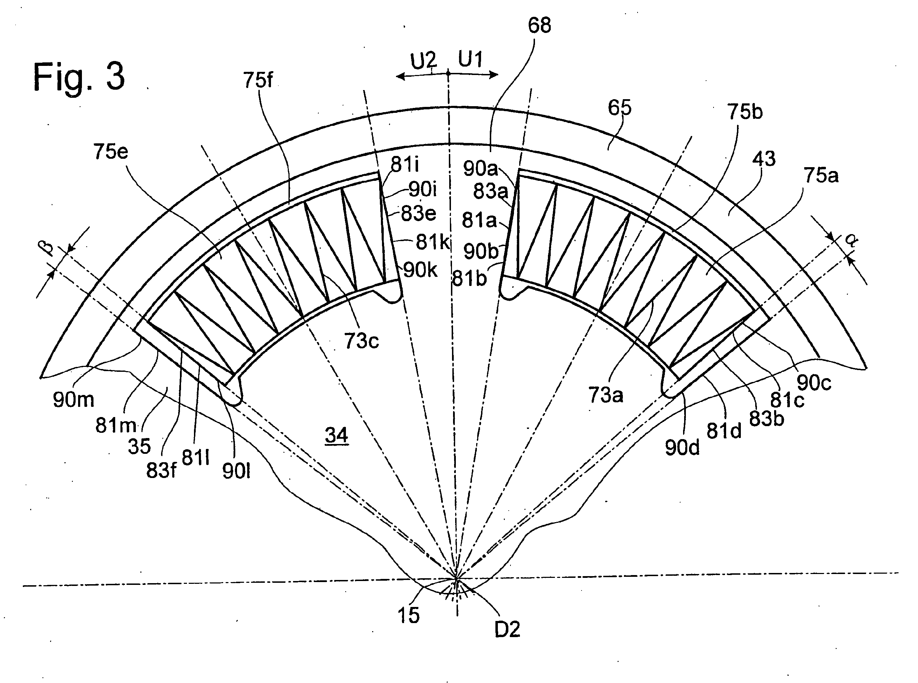

Aus der DE 197 52 451 C2 ist ein dem Kolben einer Überbrückungskupplung einer hydrodynamischen Kopplungsanordnung, wie beispielsweise einem Drehmomentwandler, zugeordneter Torsionsschwingungsdämpfer mit einem an einem Kolben einer Überbrückungskupplung befestigten antriebsseitigen Übertragungselement, einem Zwischenübertragungselement und einem mit einem Turbinenrad drehfesten abtriebsseitigen Übertragungselement bekannt, wobei das antriebsseitige Übertragungselement und das abtriebsseitige Übertragungselement das Zwischenelement mittels einer Mehrzahl von Energiespeichern zwischen sich positionieren. Das Zwischenelement weist gemäß Fig. 3 nicht nur Aussparungen für Ansteuerelemente sowohl des antriebsseitigen Übertragungselementes als auch des abtriebsseitigen Übertragungselementes auf, sondern auch ein eigenes, zwischen zwei Energiespeicher eingreifendes Ansteuerelement, wobei die Aussparungen des Zwischenelementes in Umfangsrichtung größer als das jeweilige Ansteuerelement sind. Hierdurch wird in einer ersten Relativdrehauslenkrichtung R1 entlang einer ersten Wegstrecke s1 eine erste Federstufe wirksam, bis das Ansteuerelement des antriebsseitigen Übertragungselementes die zugeordnete Aussparung des Zwischenübertragungselementes aufgebraucht hat und an einem Anschlag des letztgenannten unmittelbar in Anlage gekommen ist. Bei noch stärkerer Relativdrehauslenkung zwischen den beiden Übertragungselementen wird unter der Wirkung des Ansteuerelementes des Zwischenübertragungselementes entlang einer zweiten Wegstrecke s2 eine zweite Federstufe wirksam, bis das Zwischenübertragungselement an einem Anschlag des abtriebsseitigen Übertragungselementes in unmittelbare Anlage gelangt ist. In entgegengesetzter Relativdrehauslenkrichtung R2 erfolgt dieser Vorgang vergleichbar, allerdings mit anderer Dimensionierung der Aussparungen am Zwischenübertragungselement, so dass andere Wegstrecken s1, s2 für die Wirksamkeit der einzelnen Federstufen vorgegeben sind. Dadurch ist der Torsionsschwingungsdämpfer für Zugbetriebsphasen anders abgestimmt als für Schubbetriebsphasen. Insgesamt ergibt sich durch die zwei Federstufen pro Relativdrehauslenkrichtung R1, R2 eine geringe Federsteifigkeit bei kleinen Relativdrehauslenkungen, und eine hohe Federsteifigkeit bei großen Relativdrehauslenkungen.

Zwar ist durch diesen Torsionsschwingungsdämpfer eine feinfühlige Anpassung der Federsteifigkeit an die Größe der jeweiligen Relativdrehauslenkweite zwischen den beiden Übertragungselementen ebenso wie eine optimale Anpassung an Zug- oder Schubbetriebsphasen realisierbar, jedoch kommen Energiespeicher mit einer großen Erstreckungsweite in Umfangsrichtung zur Anwendung, weshalb diese radial außen entlang ihrer gesamten Umfangserstreckung durch eine Umfangsabstützung gegen die Wirkung rotationsbedingter Fliehkräfte geführt werden müssen. Allerdings entsteht unter der Fliehkraft eine hohe Reibkraft zwischen den einzelnen Federwindungen und der Umfangsabstützung, die sich bei zunehmender Relativdrehauslenkweite der Übertragungselemente zueinander durch erhebliche Reduzierung der Verfomungsbereitschaft der Energiespeicher und, dadurch bedingt, durch erhebliche Verschlechterung der Entkopplungsgüte bemerkbar macht. Überdies erfordern die radial außen liegenden, in Umfangsrichtung mit großer Erstreckungsweite ausgeführten Energiespeicher einen insgesamt hohen konstruktiven Aufwand und sind somit kostspielig.

Aus der DE 44 14 519 C2 ist ein konstruktiv einfacher und kostengünstiger Torsionsschwingungsdämpfer bekannt, aufweisend ein antriebsseitiges Übertragungselement, ein abtriebsseitiges Übertragungselement und wirkungsmäßig zwischen denselben angeordnete Energiespeicher. Auch dieser Torsionsschwingungsdämpfer ist dem Kolben einer Überbrückungskupplung einer hydrodynamischen Kopplungsanordnung, wie beispielsweise einem Drehmomentwandler, zugeordnet, und ist hierfür mit seinem antriebsseitigen Übertragungselement drehfest mit dem Kolben der Überbrückungskupplung verbunden, während das abtriebsseitige Übertragungselement an einer mit einer Getriebeeingangswelle drehfesten Hülse befestigt ist.

Die Energiespeicher sind bei diesem Torsionsschwingungsdämpfer in hierfür vorgesehenen Ausnehmungen der Übertragungselemente angeordnet und befinden sich dadurch auf relativ kleinem Radius um die Drehachse. Dadurch verfügen die Energiespeicher über eine in Umfangsrichtung sehr kurze Erstreckungsweite, so dass sie unter der Wirkung der Fliehkraft nur sehr begrenzt nach radial außen gebogen werden. Allerdings vermag dieser Torsionsschwingungsdämpfer ungeachtet der jeweiligen Relativdrehwinkelauslenkung stets nur mit der jeweils gleichen Federstufe zu reagieren, und bietet auch keine unterschiedlichen Wirkverhalten bei Zug- oder Schubbetriebsphasen. Es ist daher insbesondere bei kleinen Torsionsschwingungen mit nur mäßiger Entkopplungsgüte zu rechnen.

Der Erfindung liegt die Aufgabe zugrunde, einen Torsionsschwingungsdämpfer so auszubilden, dass dieser bei konstruktiv einfacher und kostengünstiger Ausführung gleichförmige Übergänge in der jeweiligen Federkennlinie begünstigt.

Diese Aufgabe wird erfindungsgemäß durch die im Kennzeichen des Anspruches 1 angegebenen Merkmale gelöst.

Der Vorteil von in den Übertragungselementen vorgesehenen, zur Aufnahme jeweils eines Energiespeichers dienenden Ausnehmungen liegt in der Ausrichtung von deren umfangsseitiger Begrenzungen in Bezug zur Ausrichtung der jeweils benachbarten Endwindung des entsprechenden Energiespeichers. Es wird hierbei davon ausgegangen, dass die umfangsseitigen Begrenzungen jeweils entlang einer ersten Verbindungslinie VL1 zu einer ersten Drehachse D1 und die umfangsseitigen Endwindungen der Energiespeicher bei fehlender Relativdrehauslenkung der Übertragungselemente entlang je einer zweiten Verbindungslinie VL2 zu einer zweiten Drehachse D2 ausgerichtet sind. Ist die zweite Verbindungslinie VL2 unter einem Anfangsanstellwinkel ϕ_{anf} gegenüber der ersten Verbindungslinie VL1 ausgerichtet, so setzt mit Beginn einer Relativdrehauslenkung der Übertragungselemente bis zum Erreichen einer vorbestimmten Grenzrelativdrehauslenkung zwischen diesen an der jeweiligen umfangsseitigen Endwindung jedes Energiespeichers eine Änderung eines Anstellwinkels ϕ ein, und zwar ausgehend vom Anfangsanstellwinkel ϕ_{anf} auf einen ebenfalls zwischen der zweiten Verbindungslinie VL2 und der ersten Verbindungslinie VL1 liegenden Endanstellwinkel ϕ_{end}. Erst bei einer über die vorbestimmte Grenzrelativdrehauslenkung hinaus gehenden Relativdrehauslenkung der Übertragungselemente an den umfangsseitigen Endwindungen jedes Energiespeichers wird, zumindest im Wesentlichen, keine Änderung des Anstellwinkels ϕ mehr ausgelöst, der Endanstellwinkels ϕ_{end} bleibt unverändert.

Solange der Anfangsanstellwinkel ϕ_{anf} besteht, kommen die umfangsseitigen Endwindungen der Energiespeicher jeweils nur mit dem radial äußeren Bereich der benachbarten umfangsseitigen Begrenzung einer Ausnehmung in Anlage. Folglich entfernt sich die umfangsseitige Endwindung mit zunehmender Radialerstreckung nach innen immer weiter von der zugeordneten umfangsseitigen Begrenzung, um im Bereich der radialen Innenseite der Ausnehmung einen Maximalabstand zu erreichen.

Durch Anlage lediglich eines Radialabschnittes der umfangsseitig letzten Windung des Energiespeichers beginnt die Verformung des Letztgenannten mit vergleichsweise geringer Federsteifigkeit, die bei zunehmender Relativdrehauslenkung zwischen den Übertragungselementen progressiv anwächst, da sich der Energiespeicher bei zunehmender Relativdrehauslenkung mit einem immer größeren Radialanteil seiner umfangsseitigen Endwindung an der benachbarten umfangsseitigen Begrenzung der Ausnehmung abstützt. Dieser Vorgang ist erst dann abgeschlossen, wenn nach Erreichen der Grenzrelativdrehauslenkung der Endanstellwinkel ϕ_{end} vorliegt, der kleiner als der Anfangsanstellwinkel ϕ_{anf} ist und im Idealfall sogar gleich Null ist. Die umfangsseitige Endwindung des Energiespeichers liegt dann im Wesentlichen vollflächig an der umfangsseitigen Begrenzung der Ausnehmung an.

Von diesem Zeitpunkt an sind die zuvor beschriebenen ersten Verformungsbedingungen VB1 des Energiespeichers abgeschlossen, bei welchen sich der Energiespeicher mit einer ersten Steifigkeitszunahme FS1 verformt, und es folgen zweite Verformungsbedingungen VB2, bei welchen sich der Energiespeicher gemäß einer zweiten Steifigkeitszunahme FS2 verformt. Hierdurch wird ein besonders weiches Ansprechverhalten bei geringen Relativdrehauslenkungen, aber auch eine vergleichsweise höhere Federsteifigkeit bei größeren Relativdrehauslenkungen erzielt.

Die Erfindung ist nachfolgend anhand eines Ausführungsbeispieles behandelt. Es zeigt:
- Fig. 1: die obere Hälfte eines Längsschnittes durch eine hydrodynamische Kopplungsanordnung mit einem Kolben einer Überbrückungskupplung und einem der letztgenannten zugeordneten Torsionsschwingungsdämpfer;
- Fig. 2: eine Draufsicht auf den Torsionsschwingungsdämpfer mit Blickrichtung A in Fig. 1 mit Ausnehmungen für Energiespeicher, wobei beide Endwindungen des vollständig dargestellten Energiespeichers an umfangsseitigen Begrenzungen der Ausnehmungen zur Anlage kommt;
- Fig. 3: wie Fig. 2, aber mit Ausnehmungen für die Energiespeicher, bei denen jeweils eine Endwindung des Energiespeichers in einem vorbestimmten Drehwinkelabstand gegenüber der jeweils benachbarten umfangsseitigen Begrenzung der Ausnehmung zur Anlage kommt; und mit Ausrichtung sowohl dieser Endwindung als auch dieser umfangsseitigen Begrenzung jeweils auf die Drehachse D2 des Torsionsschwingungsdämpfers;
- Fig. 4: wie Fig. 3, aber mit Ausrichtung der umfangsseitigen Begrenzung auf eine gegenüber der Drehachse D2 des Torsionsschwingungsdämpfers versetzte Drehachse D1;
- Fig. 5: wie Fig.3, aber mit einer zuätzlichen Ausnehmungen für Energiespeicher, bei denen jeweils beide Endwindungen in einem vorbestimmten Drehwinkelabstand gegenüber der jeweils benachbarten umfangsseitigen Begrenzung der Ausnehmung zur Anlage kommt.

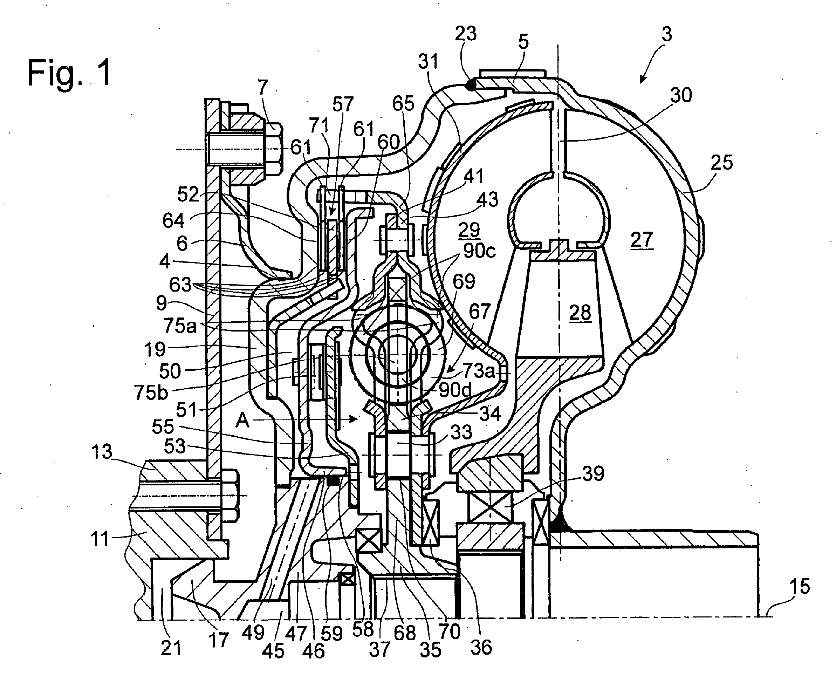

Die in Fig. 1 gezeigte hydrodynamische Kopplungsvorrichtung 3 weist ein Kupplungsgehäuse 5 auf, an welchem mittels einer Schweißnaht 4 eine Anbindungsplatte 6 befestigt ist, die über eine Mehrzahl von Aufnahmeelementen 7 und ein Kopplungselement 9, wie z. B. eine Flexplatte, mit einem Antrieb 11, beispielsweise der Kurbelwelle 13 einer Brennkraftmaschine, zur gemeinsamen Drehung gekoppelt werden kann.

Die Kopplungsvorrichtung 3 weist weiterhin im Bereich einer Drehachse 15 einen Lagerzapfen 17 auf, der an einem Deckel 19 des Gehäuses 5 vorgesehen und in einer am Antrieb 11 vorgesehenen Zentrierführung 21 aufgenommen ist.

Der Deckel 19 ist über eine Schweißnaht 23 mit einer Pumpenradschale 25 eines Pumpenrades 27 fest verbunden, das unter Bildung eines hydrodynamischen Kreises 30 mit einem Turbinenrad 29 sowie mit einem Leitrad 28 zusammenwirkt.

Das Turbinenrad 29 verfügt über eine Turbinenradschale 31, die gegenüber einer Turbinennabe 35 zentriert ist, die über eine Axiallagerung 36 an einem Freilauf 39 des Leitrades 28 in Anlage kommt. Die Turbinennabe 35 steht über eine Verzahnung 37 mit einer radial innerhalb der Turbinennabe 35 angeordneten, nicht gezeigten Getriebeeingangswelle in Drehverbindung. Üblicherweise sind derartige Getriebeeingangswellen mit einer Mittenbohrung ausgebildet, die in einen Übergangsraum 45 mündet, der mittels Durchgangsöffnungen 49 in einer Gehäusenabe 47 mit einer Druckkammer 50 verbunden ist, die axial zwischen dem Deckel 19 und einem Kolben 55 der Überbrückungskupplung 57 vorgesehen ist. Dem Kolben 55 ist ein Kolbenträger 53 zugeordnet, der mittels Tangentialblattfedern 51 zur Herstellung einer drehfesten Verbindung zwischen Kolben 55 und Deckel 19 der Gehäusenabe 47 befestigt ist.

Der Kolben 55 ist mit einem radial innen angeformten Kolbenfuß 56 an einer Aufnahme 58 der Gehäusenabe 47 mittels einer Abdichtung 59 dichtend aufgenommen und kommt in seinem radial äußeren Bereich mit einer Reibfläche 60 an einem Reibbelag 63 einer Lamelle 61 zur Anlage, wobei diese Lamelle 61 sich mittels eines weiteren Reibbelages 63, einer Zwischenlamelle 52 und einer weiteren Lamelle 61 mit beidseitigen Reibbelägen 63 an einer Reibfläche 64 des Deckels 19 abzustützen vermag. Die Lamellen 61 sind jeweils mit einer Verzahnung 71 eines antriebsseitigen Übertragungselementes 65 eines Torsionsschwingungsdämpfers 67 in drehfester Verbindung, wobei dieses antriebsseitige Übertragungselement 65, gebildet durch Deckbleche 41 und 43, über eine Vernietung 33 an der Turbinenradschale 31 befestigt ist. Das antriebsseitige Übertragungselement 65 stützt sich über einen Umfangsfedersatz 69 an einem abtriebsseitigen Übertragungselement 68 des Torsionsschwingungsdämpfers 67, in der konkreten Ausführung gebildet durch die Turbinennabe 35, ab. Eine Begrenzung der Relativdrehauslenkweite zwischen antriebsseitigem Übertragungselement 65 und abtriebsseitigem Übertragungselement 68 erfolgt durch die Vernietung 33, die mit vorbestimmtem Umfangsspiel in zugeordnete Aussparungen 70 eingreift.

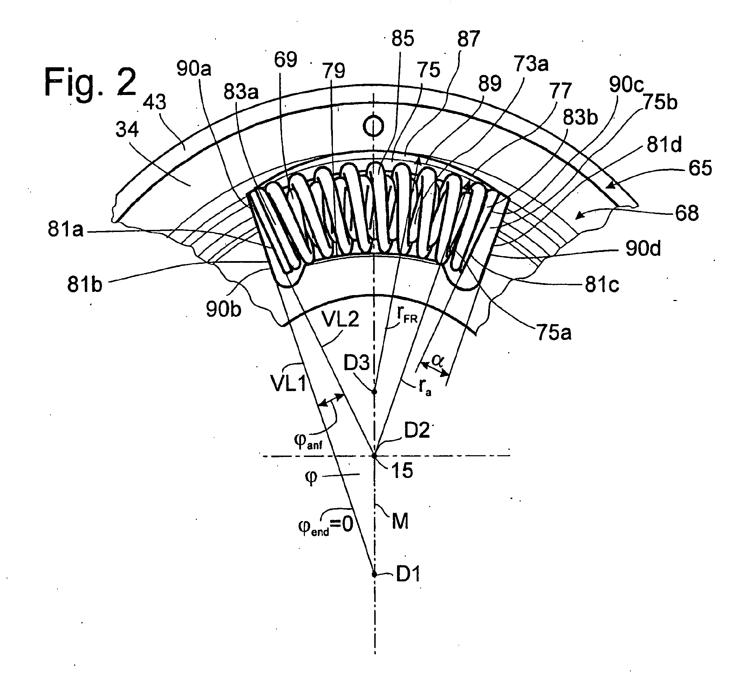

Fig. 2 zeigt das von dem Kolben 55 der Überbrückungskupplung 57 abgewandte Deckblech 43 des antriebseitigen Übertragungselementes 65 des Torsionsschwingungsdämpfers 67 hinter einer am abtriebsseitigen Übertragungselement 68, mithin also an der Turbinennabe 35, vorgesehenen Nabenscheibe 34. In einer Ausnehmung 75a des Deckbleches 43 ist, ebenso wie in einer vergleichbaren Ausnehmung des nicht gezeigten Deckbleches 41, ein Energiespeicher 73a des Umfangsfedersatzes 69 angeordnet. Im folgenden wird der Einfachheit halber lediglich das Deckblech 43 betrachtet, mit dem das Deckblech 41 bewegungsgleich ist. Die Ausnehmung 75a des Deckbleches 43 verfügt über umfangsseitige Begrenzungen 81a und 81c, die für den Energiespeicher 73a als Ansteuerelemente 90a und 90c für umfangsseitige Endwindungen 83a und 83b des Energiespeichers 73a wirksam sind. Der Energiespeicher 73a greift in eine am abtriebsseitigen Übertragungselement 68, mithin also in eine an einer Nabenscheibe 34 der Turbinennabe 35 vorgesehene Ausnehmung 75b ein. Diese Ausnehmung 75b verfügt über umfangsseitige Begrenzungen 81b und 81d, die als Ansteuerelemente 90b und 90d für die jeweils benachbarte Endwindung 83a und 83b des Energiespeichers 73a wirksam sind.

Die Ausnehmungen 75a, 75b bestehen jeweils aus einer die beiden umfangsseitigen Begrenzungen 81a und 81c sowie die umfangsseitigen Begrenzungen 81b und 81d miteinander verbindenden radialen Außenseite 77 sowie einer radialen Innenseite 79. Der Energiespeicher 73a verfügt umfangsseitig zwischen seinen beiden Endwindungen 83a, 83b über eine Mehrzahl mittlerer Windungen 85.

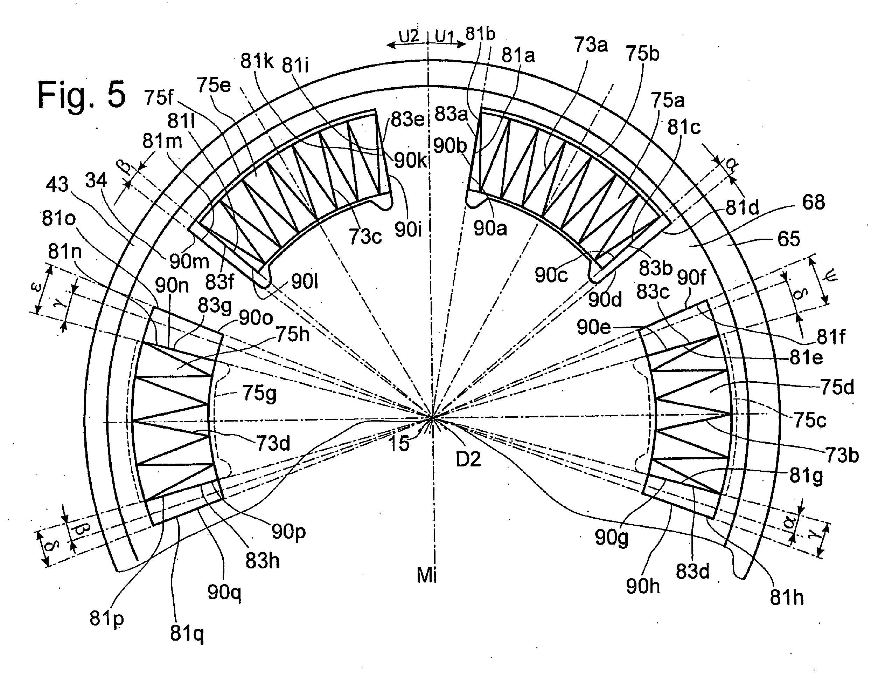

In Fig. 2 ist der Energiespeicher 73a bei Drehauslenkungsfreiheit zwischen den beiden Übertragungselementen 65 und 68 des Torsionsschwingungsdämpfers 67 dargestellt. Der Energiespeicher 73a ist im wesentlichen ohne Vorspannung und vorgekrümmt in die Ausnehmungen 75a des Deckbleches 43 eingesetzt. Bezüglich der Ausnehmung 75b der Nabenscheibe 34 besteht dagegen ein vorbestimmter Drehwinkelabstand α zur Bildung eines Freiwinkels, dessen Funktion anhand der Fig. 3 und 5 noch ausführlich erläutert wird.

Fig. 2 zeigt eine Drehachse D1, die sich durch eine Verlängerung der umfangsseitigen Begrenzung 81b der Ausnehmung 75b der Nabenscheibe 34 nach radial innen unter Bildung einer Verbindungslinie VL1 ergibt, indem die letztgenannte eine Mittellinie M der Ausnehmung 75a des Deckbleches 43 schneidet. Eine zweite Verbindungslinie VL2 entsteht durch Verlängerung der umfangsseitigen Endwindung 83a des Energiespeichers 73a nach radial innen, bis diese Verbindungslinie VL2 die bereits erwähnte Mittellinie M unter Bildung einer zweiten Drehachse D2 schneidet. Die Drehachse D2 kann, zumindest im wesentlichen, mit der Drehachse 15 des Kupplungsgehäuses 5 zusammenfallen.

Aufgrund dieser geometrischen Ausbildung von Energiespeicher 73a und Ausnehmung 75b besteht zwischen den beiden Verbindungslinien VL1 und VL2 ein Anfangsanstellwinkel ϕ_{arf}, durch welchen bewirkt wird, dass die umfangsseitige Endwindung 83a und, nach Aufbrauchen des Drehwinkelabstandes α, auch die Endwindung 83b des Energiespeichers 73a lediglich im radial äußeren Bereich an der jeweils benachbarten umfangsseitigen Begrenzung 81b, 81d der Ausnehmung 75b zur Anlage kommt. Sobald nun zwischen den Übertragungselementen 65 und 68 des Torsionsschwingungsdämpfers 67 eine weitergehende Relativdrehauslenkung eintritt, wird auf den Energiespeicher 73a über dessen umfangsseitige Endwindungen 83a und 83b eine Kraft ausgeübt, die am Energiespeicher 73a eine nach radial innen gerichtete Stabilisierungskraft erzeugt, so dass der Energiespeicher 73a auch unter Fliehkraft insbesondere mit seinen umfangsseitig mittleren Windungen 85 nicht in Anlage an der radialen Außenseite 77 der Ausnehmung 75b gelangt.

Die zunehmende Relativdrehauslenkweite der beiden Übertragungselemente 65 und 68 zueinander bewirkt, dass der Energiespeicher 73a mit seinen umfangsseitigen Endwindungen 83a und 83b immer stärker gegen die umfangsseitigen Begrenzungen 81b, 81d der Ausnehmung 75b gepresst wird, und sich dadurch, beginnend von radial außen, mit einem immer größer werdenden Radialabschnitt an der zugeordneten umfangsseitigen Begrenzung 81b, 81d anlagert. Dadurch wird der Anstellwinkel ϕ zwischen den Verbindungslinien VL1 und VL2, beginnend vom Anfangsanstellwinkel ϕ_{anf}, beständig kleiner, bis er ab einer vorbestimmten Grenzrelativdrehauslenkung zwischen den Übertragungselementen 65 und 68 auf den Wert 0 abgesenkt ist. Wie Fig. 2 zeigt, würde bei Erreichen der Grenzrelativdrehauslenkung die Verbindungslinie VL2 mit der Verbindungslinie VL1 zusammenfallen, der Winkel ϕ ist zu einem Endanstellwinkel ϕ_{end} geworden, wobei ϕ_{end} den Betrag "Null" annimmt.

Bei über die vorbestimmte Grenzrelativdrehauslenkung hinausgehender Relativdrehauslenkung der Übertragungselemente 65, 68 liegen stets die umfangsseitigen Endwindungen 83a, 83b des Energiespeichers 73a vollflächig an der benachbarten umfangsseitigen Begrenzung 81b, 81d der Ausnehmung 75b an.

Wie Fig. 2 weiterhin zeigt, kann jede Ausnehmung 75a und/oder 75b jeweils im Bereich der radialen Außenseite 77 mit einer Freistellung 87 versehen sein, wobei die letztgenannte insbesondere im umfangsseitig mittleren Bereich der radialen Außenseite 77 einen größeren Eindringraum für die umfangsseitig mittleren Windungen 85 des Energiespeichers 73a bereitstellt. Eine derartige Ausgestaltung der radialen Außenseite 77 ist insbesondere deshalb von Vorteil, weil gerade die umfangsseitig mittleren Windungen 85 eine vergleichsweise starke Radialauslenkung unter Fliehkraft in Richtung zur radialen Außenseite 77 erfahren. Obwohl diese Radialauslenkung durch die zuvor erwähnte Stabilisierungskraft begrenzt wird, soll durch die Freistellung 87 auf jeden Fall ein Kontakt einzelner Windungen, insbesondere der umfangsseitig mittleren Windungen 85, mit der zugeordneten radialen Außenseite 77 der Ausnehmung 75a vermieden werden. Mit Vorzug ist die Freistellung 87 durch einen Freistellungsradius r_{FR} um eine Drehachse D3 gebildet, wobei dieser Freistellungsradius r_{FR} kleiner ist als ein Außenradius rₐ um die Drehachse D2, wobei der Außenradius rₐ die radiale Außenseite 77 ohne Freistellung 87 beschreiben würde. Die dem Außenradius rₐ zugeordnete, freistellungsfreie radiale Außenseite ist in Fig. 2 mit einer Hilfslinie eingezeichnet und mit der Bezugsziffer 89 versehen.

Die Freistellung 87 in den Ausnehmungen 75a, 75b ist gemäß Fig. 2 in Verbindung mit der Maßnahme zur Erzeugung einer der Fliehkraft entgegenwirkenden Stabilisierungskraft eingezeichnet, kann allerdings ebenso ohne diese Maßnahme Verwendung finden, da sie eine Vergrößerung des Abstandes zwischen den Windungen des Energiespeichers 73a, hierbei insbesondere zwischen den umfangsseitig mittleren Windungen 85 und der jeweiligen radialen Außenseite 77 der Ausnehmungen 75, gegenüber einer freistellungsfreien radialen Außenseite 89 bewirkt und damit eine durch Fliehkraft ausgelöste Reibwirkung zwischen den Windungen des Energiespeichers 73a und der radialen Außenseite 77 der Ausnehmung 75b zumindest reduziert.

Die vorangehend zu den Ausnehmungen 75a und 75b sowie zum Energiespeicher 73a beschriebenen konstruktiven Lösungen können bei den Ausführungen der nachfolgend beschriebenen Figuren 3 bis 5 selbstverständlich auch bei weiteren Ausnehmungen 75c bis 75h und den darin angeordneten Energiespeichern 73b bis 73d Anwendung finden.

Auch in den Fig. 3 bis 5 ist zugunsten einer besseren Erkennbarkeit der in der Nabenscheibe 34 vorgesehenen Ausnehmungen 75b und 75f sowie, beschränkt auf Fig. 5, der Ausnehmungen 75d und 75g, das von dem Kolben 55 der Überbrückungskupplung 57 abgewandte Deckblech 43 des antriebseitigen Übertragungselementes 65 des Torsionsschwingungsdämpfers 67 hinter der Nabenscheibe 34 gezeigt, und zwar in einer relativdrehauslenkungsfreien Ausgangsposition. In der gegenüber der Mittellinie M in Uhrzeigerrichtung U1 versetzten Ausnehmung 75a des Deckbleches 43 und damit selbstverständlich auch des nicht eingezeichneten Deckbleches 41 ist der bereits beschriebene Energiespeicher 73a eingesetzt, der mit der ebenfalls bereits beschriebenen Ausnehmung 75b der Nabenscheibe 34 zusammenwirkt.

Weiterhin zeigt Fig. 3 in einer gegenüber der Mittellinie M in Gegenuhrzeigerrichtung U2 versetzten weiteren Ausnehmung 75e des Deckbleches 43 einen Energiespeicher 73c eingesetzt, wobei auch dieser vorgekrümmt und im wesentlichen ohne Vorspannung in der Ausnehmung 75e angeordnet ist, und zwar derart, dass die umfangsseitige Endwindung 83e des Energiespeichers 73c an der umfangsseitigen Begrenzung 81i der Ausnehmung 75e und die umfangsseitige Endwindung 83f an der umfangsseitigen Begrenzung 81l in Anlage steht. In der Nabenscheibe 34 ist wieder eine zugeordnete Ausnehmung 75f ausgebildet mit einer umfangsseitigen Begrenzung 81k, an welcher die umfangsseitige Endwindung 83e des Energiespeichers 73c in der relativdrehauslenkungsfreien Ausgangsposition in Anlage steht, und mit einer umfangsseitigen Begrenzung 81m, welche sich in einem Drehwinkelabstand β von der zugeordneten Endwindung 83f des Energiespeichers 73c entfernt befindet. Die umfangsseitigen Begrenzungen 81i, 81k, 81l, 81m dienen jeweils als Ansteuerelemente 90i, 90k, 90l, 90m für den Energiespeicher 73c.

Funktional wird bei Auslenkung des Deckbleches 43 aus dessen relativdrehauslenkungsfreier Ausgangsposition selbstverständlich auch jeweils das in den Fig. 3 bis 5 nicht dargestellte Deckblech 41 mit ausgelenkt, jedoch wird bei den nachfolgenden Betrachtungen jeweils nur von dem eingezeichneten Deckblech 43 ausgegangen. Bei Auslenkung desselben aus seiner relativdrehauslenkungsfreier Ausgangsposition in Uhrzeigerrichtung U1 wird durch die umfangsseitige Endwindung 83e des Energiespeichers 73c diese Bewegung unverzüglich auf die benachbarte umfangsseitige Begrenzung 81k und damit auf die Nabenscheibe 34 übertragen, so dass diese der Bewegung des Deckbleches 43 folgt. Allerdings kommt bei dieser Relativdrehauslenkung die Endwindung 83b des in Auslenkrichtung nächsten Energiespeichers 73a wegen des Drehwinkelabstandes α noch nicht in Anlage an der umfangsseitigen Begrenzung 81d der Nabenscheibe 34, so dass allein der Energiespeicher 73c wirksam ist. Erst bei einer Relativdrehauslenkung des Deckbleches 43 gegenüber der Nabenscheibe 34, bei welcher der Drehwinkelabstand α restlos aufgebraucht ist, wird auch der weitere Energiespeicher 73a wirksam, indem er mit seiner umfangsseitigen Endwindung 83b an der umfangsseitigen Begrenzung 81d zur Anlage kommt. Bei kleinen Relativdrehauslenkungen bis zum Aufbrauchen des Drehwinkelabstandes α steigt demnach die Federsteifigkeit des Umfangsfedersatzes 69 wegen der Wirksamkeit lediglich des Energiespeichers 73c weicher an als bei größeren Drehwinkelauslenkungen nach aufgebrauchtem Drehwinkelabstand α, wenn zusätzlich auch der Energiespeicher 73a wirksam ist..

Davon ausgehend, dass Bewegungen des Deckbleches 43 gegenüber der Nabenscheibe 34 in Uhrzeigerrichtung U1 in Zugbetriebsphasen des Torsionsschwingungsdämpfers 67 erfolgen, werden Schubbetriebsphasen eine Relativdrehauslenkung des Deckbleches 43 gegenüber der Nabenscheibe 34 in Gegenuhrzeigerrichtung U2 zur Folge haben. In diesem Fall wird die umfangsseitige Endwindung 83a des Energiespeichers 73a diese Bewegung unverzüglich über die benachbarte umfangsseitige Begrenzung 81b der Nabenscheibe 34 auf dieselbe übertragen, so dass die Nabenscheibe 34 der Bewegung des Deckbleches 43 folgt. Allerdings kommt bei dieser Relativdrehauslenkung des Deckbleches 43 gegenüber der Nabenscheibe 34 die Endwindung 83f des in Auslenkrichtung nächsten Energiespeichers 73c wegen des Drehwinkelabstandes β noch nicht in Anlage an der umfangsseitigen Begrenzung 81m der Nabenscheibe 34, so dass allein der Energiespeicher 73a wirksam ist. Erst bei einer Relativdrehauslenkung des Deckbleches 43 gegenüber der Nabenscheibe 34, bei welcher der Drehwinkelabstand β restlos aufgebraucht ist, wird auch der weitere Energiespeicher 73c wirksam, indem er mit seiner umfangsseitigen Endwindung 83f an der umfangsseitigen Begrenzung 81m der Nabenscheibe 34 zur Anlage kommt. Bei kleinen Drehauslenkungen bis zum Aufbrauchen des Drehwinkelabstandes β steigt demnach die Federsteifigkeit des Umfangsfedersatzes 69 wegen der Wirksamkeit lediglich des Energiespeichers 73a weicher an als bei größeren Drehwinkelauslenkungen nach aufgebrauchtem Drehwinkelabstand β, wenn zusätzlich auch der Energiespeicher 73c wirksam ist.

Selbstverständlich können die Drehwinkelabstände α und β gleich groß sein, jedoch besteht bei unterschiedlicher Bemessung zumeist eine optimale Anpassung an die Situation bei Zug- oder Schubbetriebsphasen.

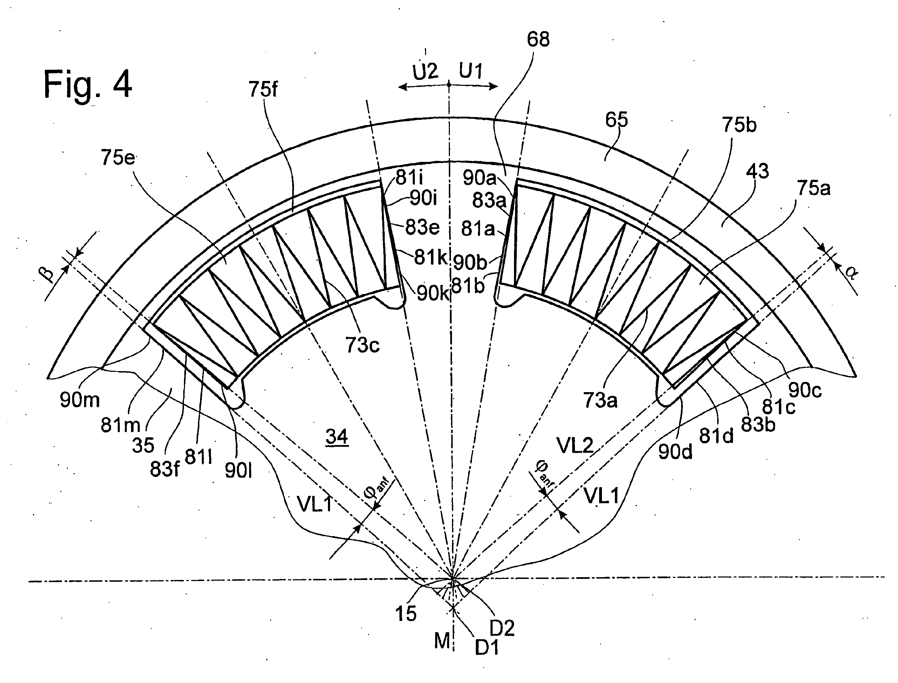

Die Ausführung nach Fig. 4 entspricht derjenigen nach Fig. 3 im wesentlichen, verfügt aber über eine Ausrichtung der umfangsseitigen Begrenzungen 81b, 81d, 81k ,81m der Ausnehmungen 75b und 75f der Nabenscheibe 34 gegenüber den umfangsseitigen Begrenzungen 81a, 81c, 81i ,81l der Ausnehmungen 75a und 75e des Deckbleches 43, und damit gegenüber den Endwindungen 83a, 83b, 83e ,83f der Energiespeicher 73a und 73c, wie dies bereits anhand Fig. 2 erläutert worden ist. Analog zur Darstellung in Fig. 2 ergeben sich demnach auch in Fig. 4 zwei voneinander beabstandete Drehachsen D1 und D2.

Die Ausführung nach Fig. 5 weist, gegenüber der Ausführung nach Fig. 3, weitere Ausnehmungen auf, und zwar, ausgehend von der Mittellinie M in Uhrzeigerrichtung U1, eine Ausnehmung 75c im Deckblech 43 mit umfangsseitigen Begrenzungen 81e und 81g, an denen jeweils umfangsseitige Endwindungen 83c und 83d eines Energiespeichers 73b zur Anlage kommen, wobei der Energiespeicher 73b vorgekrümmt und im wesentlichen ohne Vorspannung in die Ausnehmung 75c eingesetzt ist. Auch in der Nabenscheibe 34 ist eine Ausnehmung 75d ausgebildet, die über umfangsseitige Begrenzungen 81f und 81h verfügt. In der relativdrehauslenkungsfreien Ausgangsposition des Torsionsschwingungsdämpfers 67 ist die umfangsseitige Endwindung 83c des Energiespeichers 73b durch einen Drehwinkelabstand ψ von der benachbarten umfangsseitigen Begrenzung 81f entfernt, die umfangsseitige Endwindung 83d des Energiespeichers 73b dagegen durch einen Drehwinkelabstand γ von der benachbarten umfangsseitigen Begrenzung 81h. Die umfangsseitigen Begrenzungen 81e, 81f, 81g, 81h dienen jeweils als Ansteuerelemente 90e, 90f, 90g, 90h für den Energiespeicher 73b.

Ausgehend von der Mittellinie M in Gegenuhrzeigerrichtung U2 ist eine Ausnehmung 75g im Deckblech 43 vorgesehen, mit umfangsseitigen Begrenzungen 81n und 81p, an denen jeweils umfangsseitige Endwindungen 83g und 83h eines Energiespeichers 73d zur Anlage kommen, wobei der Energiespeicher 73d vorgekrümmt und im wesentlichen ohne Vorspannung in die Ausnehmung 75g eingesetzt ist. Auch in der Nabenscheibe 34 ist eine Ausnehmung 75h ausgebildet, die über umfangsseitige Begrenzungen 81o und 81q verfügt. In der relativdrehauslenkungsfreien Ausgangsposition des Torsionsschwingungsdämpfers 67 ist die umfangsseitige Endwindung 83g des Energiespeichers 73d durch einen Drehwinkelabstand ε von der benachbarten umfangsseitigen Begrenzung 81o entfernt, die umfangsseitige Endwindung 83h des Energiespeichers 73d dagegen durch einen Drehwinkelabstand δ von der benachbarten umfangsseitigen Begrenzung 81q. Die umfangsseitigen Begrenzungen 81n, 81o, 81p, 81q dienen jeweils als Ansteuerelemente 90n, 90o, 90p, 90q für den Energiespeicher 73d.

Bei Zugbetriebsphasen und somit bei Auslenkung des Deckbleches 43 aus seiner relativdrehauslenkungsfreien Ausgangsposition in Uhrzeigerrichtung U1 wird, wie anhand Fig. 3 bereits beschrieben, der Energiespeicher 73c unverzüglich und der Energiespeicher 73a erst nach Überwindung des Drehwinkelabstandes α wirksam. In der in Drehrichtung nachfolgenden Ausnehmung 75d wird ebenfalls ein dem Drehwinkelabstand α entsprechender Drehwinkelabstand durchfahren, so dass für die Ausnehmung 75d lediglich noch ein Drehwinkelabstand verbleibt, der sich aus der Differenz des Drehwinkelabstandes γ und des Drehwinkelabstandes α ergibt. Erst wenn auch diese Differenz aus den vorgenannten Drehwinkelabständen in Uhrzeigerrichtung U1 vollständig aufgebraucht ist, kommt die umfangsseitige Endwindung 83d des Energiespeichers 73b an der benachbarten umfangsseitigen Begrenzung 81h in Anlage, so dass der Energiespeicher 73b von nun an als als dritter Energiespeicher bei der Übertragung der Bewegung des Deckbleches 43 auf die Nabenscheibe 34 wirksam ist. Allerdings kommt bei dieser Relativdrehauslenkung des Deckbleches 43 gegenüber der Nabenscheibe 34 die Endwindung 83g des vierten Energiespeichers 73d wegen des gegenüber dem Drehwinkelabstand γ größeren Drehwinkelabstandes ε noch nicht in Anlage an der umfangsseitigen Begrenzung 81o der Nabenscheibe 34. Erst bei einer nochmals weitergehenden Relativdrehauslenkung des Deckbleches 43 gegenüber der Nabenscheibe 34, bei welcher auch der Drehwinkelabstand ε restlos aufgebraucht ist, wird der letzte Energiespeicher 73d wirksam, indem er mit seiner umfangsseitigen Endwindung 83g an der umfangsseitigen Begrenzung 81o zur Anlage kommt. Die Energiespeicher 73a, 73b und 73d werden demnach in drei Stufen zugeschaltet, stets wirksam ist allein der Energiespeicher 73c. Dadurch ergibt sich bis zum Erreichen des größten Drehwinkelabstandes ε eine mehrstufige und damit sehr weich anwachsende Federsteifigkeit für den Umfangsfedersatz 69.

In Schubbetriebsphasen und damit bei Auslenkung des Deckbleches 43 aus seiner relativdrehauslenkungsfreien Ausgangsposition in Gegenuhrzeigerrichtung U2 wird, wie anhand Fig. 3 bereits beschrieben, der Energiespeicher 73a unverzüglich und der Energiespeicher 73c erst nach Überwindung des Drehwinkelabstandes β wirksam, der auch in der weiteren Ausnehmung 75h durchfahren wird. Die letztgenannte Ausnehmung 75h verfügt allerdings über den gegenüber dem Drehwinkelabstand β größeren Drehwinkelabstand δ. Erst wenn dieser in Uhrzeigerrichtung U1 vollständig durchfahren ist, kommt auch die umfangsseitige Endwindung 83h des Energiespeichers 73d an der benachbarten umfangsseitigen Begrenzung 81q in Anlage, und wirkt demnach als dritter Energiespeicher bei der Übertragung der Bewegung des Deckbleches 43 auf die Nabenscheibe 34. Allerdings kommt bei dieser Relativdrehauslenkung des Deckbleches 43 gegenüber der Nabenscheibe 34 die Endwindung 83c des vierten Energiespeichers 73b wegen des gegenüber dem Drehwinkelabstand δ größeren Drehwinkelabstandes ψ noch nicht in Anlage an der umfangsseitigen Begrenzung 81f der Nabenscheibe 34. Erst bei einer nochmals weitergehenden Relativdrehauslenkung des Deckbleches 43 gegenüber der Nabenscheibe 34, bei welcher auch der Drehwinkelabstand ψ restlos aufgebraucht wird, ist auch der letzte Energiespeicher 73b wirksam, indem er mit seiner umfangsseitigen Endwindung 83c an der umfangsseitigen Begrenzung 81f zur Anlage kommt. Die Energiespeicher 73c, 73d und 73b werden demnach in drei Stufen zugeschaltet, stets wirksam ist allein der Energiespeicher 73a. Dadurch ergibt sich bis zum Erreichen des größten Drehwinkelabstandes ψ eine mehrstufige und dadurch sehr weich anwachsende Federsteifigkeit für den Umfangsfedersatz 69.

### Bezugszeichenliste

- 3.: hydrodyn. Kopplungsvorrichtung
- 4.: Schweißnaht
- 5.: Kupplungsgehäuse
- 6.: Anbindungsplatte
- 7.: Aufnahmeelemente
- 9.: Kopplungselement
- 11.: Antrieb
- 13.: Kurbelwelle
- 15.: Drehachse
- 17.: Lagerzapfen
- 19.: Deckel
- 21.: Zentrierführung
- 23.: Schweißnaht
- 25.: Pumpenradschale
- 27.: Pumpenrad
- 28.: Leitrad
- 29.: Turbinenrad
- 30.: hydrod. Kreis
- 31.: Turbinenradschale
- 33.: Vernietung
- 34.: Nabenscheibe
- 35.: Turbinennabe
- 36.: Axiallagerung
- 37.: Verzahnung
- 39.: Freilauf
- 41.: Deckblech
- 43.: Deckblech
- 45.: Übergangsraum
- 47.: Gehäusenabe
- 49.: Durchgangsöffnungen
- 50.: Druckkammer
- 51.: Tangentialblattfedern
- 52.: Zwischenlamelle
- 53.: Kolbenträger
- 55.: Kolben
- 56.: Kolbenfuß
- 57.: Überbrückungskupplung
- 58.: Aufnahme
- 60.: Reibfläche
- 61.: Lamelle
- 63.: Reibbelag
- 64.: Reibfläche
- 65.: antriebsseitiges Übertragungselement
- 67.: Torsionsschwingungsdämpfer
- 68.: abtriebsseitiges Übertragungselement
- 69.: Umfangsfedersatz
- 70.: Aussparungen
- 71.: Verzahnung
- 73.: Energiespeicher
- 75.: Ausnehmung
- 77.: radiale Außenseite
- 79.: radiale Innenseite
- 81.: umfangsseitige Begrenzung
- 83.: umfangsseitige Endwindung
- 85.: umfangsseitig mittlere Windung
- 87.: Freistellung
- 89.: freistellungsfreie radiale Außenseite
- 90.: Ansteuerelemente

## Patentansprüche

1. Torsionsschwingungsdämpfer (67) für eine Überbrückungskupplung (57) einer hydrodynamischen Kopplungsanordnung (3) mit einem antriebsseitigen Übertragungselement (65) und einem relativ hierzu gegen die Wirkung von Energiespeichern (73a, 73b; 73c, 73d) um einen Relativdrehwinkel auslenkbaren abtriebsseitigen Übertragungselement (68), wobei jedem Energiespeicher (73a, 73b; 73c, 73d) jeweils zumindest ein der Beaufschlagung dienendes Ansteuerelement (90a, 90b, 90c, 90d, 90e, 90f, 90g, 90h, 90i, 90k, 90l, 90m, 90n, 90o, 90p, 90q) zugeordnet ist, von denen wenigstens ein Teil zur Realisierung einer mehrstufigen Wirkung der Energiespeicher (73a, 73b; 73c, 73d) erst nach Passage eines vorbestimmten Freiwegs in Umfangsrichtung mit einer zugeordneten Endwindung des entsprechenden Energiespeichers (73a, 73b; 73c, 73d) in Wirkverbindung gelangt, wobei wenigstens ein Übertragungselement (65, 68) pro Relativauslenkrichtung (U1, U2) über eine Mehrzahl von Ausnehmungen (75a, 75b, 75c, 75d; 75e, 75f; 75g, 75h) zur Aufnahme jeweils eines Energiespeichers (73a, 73b; 73c, 73d) verfügt, und wenigstens eine umfangsseitige Begrenzung (81a, 81b, 81c, 81d, 81e, 81f, 81g, 81h; 81i, 81k, 81l, 81m, 81 n, 81o_{,} 81p, 81 q) jeder Ausnehmung (75a, 75b, 75c, 75d; 75e, 75f; 75g, 75h) als Ansteuerelement (90a, 90b, 90c, 90d, 90e, 90f, 90g, 90h, 90i, 90k, 90l, 90m, 90n, 90o, 90p, 90q) für den zugeordneten Energiespeicher (73a, 73b; 73c, 73d) vorgesehen ist, wobei ohne Relativdrehauslenkung der Übertragungselemente (65, 68) bei einem Teil der Ausnehmungen (75b, 75d, 75f, 75h) wenigstens eine umfangsseitige Begrenzung (81 d, 81 f, 81h; 81 m, 81o_{,} 81 q) zur Bereitstellung des Freiwegs mit vorbestimmtem Drehwinkelabstand (α, β, γ, δ, ε, ψ) gegenüber der jeweils benachbarten Endwindung (83b, 83c, 83d, 83f, 83g, 83h) des zugeordneten Energiespeichers (73a, 73b, 73c, 73d) angeordnet ist, so dass erst bei Erreichen einer vorgegebenen Relativdrehauslenkweite in der jeweils gewählten Relativdrehauslenkrichtung (U1, U2) der Übertragungselemente (65, 68) der vorbestimmte Drehwinkelabstand (α, β, γ, δ ε, ψ) aufgebraucht ist, und die entsprechende umfangsseitige Begrenzung (81 d, 81 f, 81 h, 81 m, 81o, 81q) als Ansteuerelement (90d, 90f, 90h, 90m, 90o, 90q) auf die benachbarte Endwindung (83b, 83c, 83d, 83f, 83g, 83h) des zugeordneten Energiespeichers (73a, 73b, 73c, 73d) einwirkt,
**dadurch gekennzeichnet, dass**
die umfangsseitigen Begrenzungen (81 b, 81 d, 81 i, 81 m) von Ausnehmungen (75b, 75f) eines Übertragungselementes (68) entlang je einer ersten Verbindungslinie (VL1) zu einer ersten Drehachse (D1) im Wesentlichen auf dieselbe ausgerichtet sind,
die umfangsseitigen Begrenzungen (81a, 81c, 81k, 81f) von Ausnehmungen (75a, 75e) eines anderen Übertragungselementes (65) und damit die umfangsseitigen Endwindungen (83a, 83b, 83e, 83f) jedes Energiespeichers (73a, 73c) bei fehlender Relativdrehauslenkung der Übertragungselemente (65, 68) entlang je einer zweiten Verbindungslinie (VL2) zu einer zweiten Drehachse (D2) im Wesentlichen auf dieselbe ausgerichtet sind,
die zweite Verbindungslinie (VL2) unter einem Anfangsanstellwinkel (ϕ_{anf}) gegenüber der ersten Verbindungslinie (VL1) ausgerichtet ist,
mit Beginn einer Relativdrehauslenkung der Übertragungselemente (65, 68) bis zum Erreichen einer vorbestimmten Grenzrelativdrehauslenkung zwischen diesen an der jeweiligen umfangsseitigen Endwindung (83a, 83b, 83e, 83f) jedes Energiespeichers (73a, 73c) eine Änderung eines Anstellwinkels (ϕ), ausgehend vom Anfangsanstellwinkel (ϕanf), auf einen ebenfalls zwischen der zweiten Verbindungslinie (VL2) und der ersten Verbindungslinie (VL1) liegenden Endanstellwinkel (ϕ_{end}) einsetzt, und
bei einer über die vorbestimmte Grenzrelativdrehauslenkung hinaus gehenden Relativdrehauslenkung der Übertragungselemente (65, 68) die umfangsseitigen Endwindungen (83a, 83b, 83e, 83f) jedes Energiespeichers (73a, 73c) zumindest im Wesentlichen keiner weiteren Änderung des Anstellwinkels (ϕ) unterworfen sind.

2. Torsionsschwingungsdämpfer nach Anspruch 1,
**dadurch gekennzeichnet,**
**dass** der Anfangsanstellwinkel (ϕ_{anf}) betragsmäßig größer als der Endanstellwinkel (ϕ_{end}) ist.

3. Torsionsschwingungsdämpfer nach Anspruch 1 oder 2,
**dadurch gekennzeichnet,**
**dass** der Anfangsanstellwinkel (ϕ_{anf}) betragsmäßig größer Null und der Endanstellwinkel (ϕ_{end}) im Wesentlichen gleich Null ist.

4. Torsionsschwingungsdämpfer nach einem der Ansprüche 1 bis 3,
**dadurch gekennzeichnet,**
**dass** die umfangsseitigen Endwindungen (83a, 83b, 83e, 83f) des jeweiligen Energiespeichers (73a, 73c) bei fehlender Relativdrehauslenkung der Übertragungselemente (65, 68) nur mit ihren radial äußeren Bereichen an der jeweils zugeordneten umfangsseitigen Begrenzung (81 b, 81 d, 81k, 81m) in Anlage stehen, und erst bei Erreichen der Grenzrelativposition der Übertragungselemente (65, 68) über ihre gesamte radiale Erstreckungsweite in Anlage gelangen.

## Claims

1. Torsion vibration damper (67) for a bridging coupling (57) of a hydrodynamic coupling assembly (3) with a drive-side transmission element (65) and an output-side transmission element (68) which can be deflected relative thereto through a relative rotation angle against the effect of energy accumulators (73a, 73b; 73c, 73d), wherein at least one control element (90a, 90b, 90c, 90d, 90e, 90f, 90g, 90h, 90i, 90k, 901, 90m, 90n, 90o, 90p, 90q) serving for application is allocated to each energy accumulator (73a, 73b; 73c, 73d) and at least some of said elements, to achieve a multi-stage effect of the energy accumulators (73a, 73b; 73c, 73d), only come into active connection with an allocated end winding of the corresponding energy accumulator (73a, 73b; 73c, 73d) after passing a predetermined clear path in the peripheral direction, wherein at least one transmission element (65, 68) per relative deflection direction (U1, U2) has a plurality of recesses (75a, 75b, 75c, 75d; 75e, 75f; 75g, 75h) each to receive one energy accumulator (73a, 73b; 73c, 73d), and at least one peripheral-side limit stop (81a, 81b, 81c, 81d, 81e, 81f, 81g, 81h; 81i, 81k, 811, 81m, 81n, 81o, 81p, 81q) of each recess (75a, 75b, 75c, 75d; 75e, 75f; 75g, 75h) is provided as a control element (90a, 90b, 90c, 90d, 90e, 90f, 90g, 90h, 90i, 90k, 901, 90m, 90n, 90o, 90p, 90q) for the allocated energy accumulator (73a, 73b; 73c, 73d), wherein without relative rotation deflection of the transmission elements (65, 68) in a part of the recesses (75b, 75d, 75f, 75h), at least one peripheral-side limit stop (81d, 81f, 81h; 81m, 81o, 81q) to provide the clear path is arranged with predetermined rotary angle spacing (α, β, γ, δ, ε, ψ) in relation to the adjacent end winding (83b, 83c, 83d, 83f, 83g, 83h) of the allocated energy accumulator (73a, 73b, 73c, 73d) so that only on reaching a prespecified relative rotation deflection width in the respective selected relative rotation deflection direction (U1, U2) of the transmission elements (65, 68) is the predetermined rotary angle spacing (α, β, γ, δ, ε, ψ) consumed, and the corresponding peripheral-side limit stop (81d, 81f, 81h, 81m, 81o, 81q) acts as a control element (90d, 90f, 90h, 90m, 90o, 90q) on the adjacent end winding (83b, 83c, 83d, 83f, 83g, 83h) of the allocated energy accumulator (73a, 73b, 73c, 73d),
**characterized in that**
the peripheral-side limit stops (81b, 81d, 81i, 81m) of recesses (75b, 75f) of a transmission element (68) are each oriented along a first connecting line (VL1) to a first rotation axis (D1) substantially towards this,
the peripheral-side limit stops (81a, 81c, 81k, 81f) of recesses (75a, 75e) of another transmission element (65) and hence the peripheral-side end windings (83a, 83b, 83e, 83f) of each energy accumulator (73a, 73c), on the absence of relative rotation deflection of the transmission elements (65, 68), are each oriented along a second connecting line (VL2) to a second rotation axis (D2) substantially towards this,
the second connecting line (VL2) is oriented at an initial set angle (ϕ_{anf}), in relation to the first connecting line (VL1),
on the start of a relative rotation deflection of the transmission elements (65, 68), until reaching a predetermined limit relative rotation deflection between these at the respective peripheral-side end winding (83a, 83b, 83e, 83f) of each energy accumulator (73a, 73c), a change is made to the set angle (ϕ) starting from the initial set angle (ϕ_{anf}) to a final set angle (ϕ_{end}) lying between the second connecting line (VL2) and the first connecting line (VL1), and
on a relative rotation deflection beyond the predetermined limit relative rotation deflection of the transmission elements (65, 68), the peripheral-side end windings (83a, 83b, 83e, 83f) of each energy accumulator (73a, 73c) are subject at least to substantially no further change in set angle (ϕ).

2. Torsion vibration damper according to Claim 1, **characterized in that** the initial set angle (ϕ_{anf}) is greater in amount than the final set angle (ϕ_{end}).

3. Torsion vibration damper according to Claim 1 or 2, **characterized in that** the initial set angle (ϕ_{anf}) is greater in amount than zero and the final set angle (ϕ_{end}) is substantially equal to zero.

4. Torsion vibration damper according to any of Claims 1 to 3, **characterized in that** the peripheral-side end windings (83a, 83b, 83e, 83f) of the respective energy accumulator (73a, 73c), on the absence of relative rotation deflection of the transmission elements (65, 68), stand in contact only with their radially outer regions at the respective allocated peripheral-side limit (81b, 81d, 81k, 81m), and only on reaching the relative limit position of the transmission elements (65, 68) come into contact over their entire radial extent width.

## Revendications

1. Amortisseur de vibrations de torsion (67) pour un embrayage par pontage (57) d'un agencement de couplage hydrodynamique (3) doté d'un élément de transmission (65) placé du côté d'entraînement en entrée et d'un élément de transmission (68) placé du côté d'entraînement en sortie pouvant être dévié d'un angle de rotation relatif par rapport à lui contre l'effet d'accumulateurs d'énergie (73a, 73b; 73c, 73d), au moins un élément de commande (90a, 90b, 90c, 90d, 90e, 90f, 90g, 90h, 90i, 90k, 901, 90m, 90n, 90o, 90p, 90q) servant d'élément de sollicitation étant respectivement associé à chaque accumulateur d'énergie (73a, 73b ; 73c, 73d), parmi lesquels au moins une partie se positionne en liaison active pour réaliser un effet à plusieurs étages des accumulateurs d'énergie (73a, 73b ; 73c, 73d) après avoir passé un passage libre prédéterminé dans la direction périphérique avec un bobinage final associé de l'accumulateur d'énergie (73a, 73b; 73c, 73d) correspondant, au moins un élément de transmission (65, 68) par direction de déviation relative (U1, U2) disposant d'une pluralité d'évidements (75a, 75b, 75c, 75d ; 75e, 75f ; 75g, 75h) servant respectivement à recevoir un accumulateur d'énergie (73a, 73b ; 73c, 73d), et au moins une délimitation (81a, 81b, 81c, 81d, 81e, 81f, 81g, 81h ; 81i, 81k, 811, 81m, 81n, 81o, 81p, 81q) située sur le côté périphérique de chaque évidement (75a, 75b, 75c, 75d; 75e, 75f; 75g, 75h) servant d'élément de commande (90a, 90b, 90c, 90d, 90e, 90f, 90g, 90h, 90i, 90k, 901, 90m, 90n, 90o, 90p, 90q) pour l'accumulateur d'énergie (73a, 73b ; 73c, 73d) associé, au moins une délimitation (81d, 81f, 81h ; 81m, 81o, 81q) située sur le côté périphérique étant disposée sans déviation de rotation relative des éléments de transmission (65, 68) pour une partie des évidements (75b, 75d, 75f, 75h) afin de mettre à disposition le passage libre avec un écartement angulaire de rotation (α, β, γ, δ, ε, ψ) prédéterminé par rapport au bobinage final (83b, 83c, 83d, 83f, 83g, 83h) respectivement connexe de l'accumulateur d'énergie (73a, 73b, 73c, 73d) associé, de sorte que ce n'est que lorsqu'un écartement de déviation de rotation relative prédéfini est atteint dans la direction de déviation de rotation relative (U1, U2) respectivement choisie des éléments de transmission (65, 68) que l'écartement angulaire de rotation (α, β, γ, δ, ε, ψ) prédéterminé est utilisé, et que la délimitation située sur le côté périphérique (81d, 81f, 81h, 81m, 81o, 81q) correspondant agit comme élément de commande (90d, 90f, 90h, 90m, 90o, 90q) sur le bobinage final (83b, 83c, 83d, 83f, 83g, 83h) connexe de l'accumulateur d'énergie (73a, 73b, 73c, 73d) associé ;
**caractérisé en ce que** :
les délimitations (81b, 81d, 81i, 81m) placées sur le côté périphérique des évidements (75b, 75f) d'un élément de transmission (68) sont alignées pour l'essentiel sur une première ligne de jonction (VL1) reliant à un premier axe de rotation (D1) le long respectivement de ladite ligne ;
les délimitations placées sur le côté périphérique (81a, 81c, 81k, 81f) des évidements (75a, 75e) d'un autre élément de transmission (65) et ainsi les bobinages finaux (83a, 83b, 83e, 83f) placés du côté périphérique de chaque accumulateur d'énergie (73a, 73c) sont alignés, en cas de défaut de déviation de rotation relative des éléments de transmission (65, 68), pour l'essentiel sur une deuxième ligne de jonction (VL2) reliant à un deuxième axe de rotation (D2) le long de ladite ligne ;
la deuxième ligne de jonction (VL2) est orientée selon un angle de réglage initial (ϕ_{anf}) par rapport à la première ligne de jonction (VL1);
au début d'une déviation de rotation relative des éléments de transmission (65, 68) et jusqu'à ce qu'une déviation de rotation relative limite prédéterminée soit atteinte entre ceux-ci au niveau du bobinage final (83a, 83b, 83e, 83f) respectif placé du côté périphérique de chaque accumulateur d'énergie (73a, 73c), il se produit également une variation d'un angle de réglage (ϕ), en partant de l'angle de réglage initial (ϕ_{anf}) pour atteindre un angle de réglage final (ϕ_{end}), entre la deuxième ligne de jonction (VL2) et la première ligne de jonction (VL1);
en cas de déviation de rotation relative des éléments de transmission (65, 68) en partant de la déviation de rotation relative limite prédéterminée, les bobinages finaux (83a, 83b, 83e, 83f) placés du côté périphérique de chaque accumulateur d'énergie (73a, 73c) ne sont soumis, au moins pour l'essentiel, à aucune variation supplémentaire de l'angle de réglage (ϕ).

2. Amortisseur de vibrations de torsion selon la revendication 1, **caractérisé en ce que** l'angle de réglage initial (ϕ_{anf}) est plus grand que l'angle de réglage final (ϕ_{end}).

3. Amortisseur de vibrations de torsion selon la revendication 1 ou 2, **caractérisé en ce que** l'angle de réglage initial (ϕ_{anf}) est supérieur à zéro et que l'angle de réglage final (ϕ_{end}) est pour l'essentiel égal à zéro.

4. Amortisseur de vibrations de torsion selon l'une quelconque des revendications 1 à 3, **caractérisé en ce que** les bobinages finaux (83a, 83b, 83e, 83f) placés du côté périphérique de l'accumulateur d'énergie (73a, 73c) respectif ne sont en contact, en cas de défaut de déviation de rotation relative des éléments de transmission (65, 68), qu'avec la délimitation (81b, 81d, 81k, 81m) placée du côté périphérique respectivement associée par le biais de leurs zones extérieures dans le plan radial et que ce n'est que lorsque la position relative limite des éléments de transmission (65, 68) est atteinte qu'ils entrent en contact sur l'ensemble de leur extension.
